# EUROPÄISCHE PATENTSCHRIFT

(11) **EP 2 072 428 B1**
(45) Veröffentlichungstag und Bekanntmachung des Hinweises auf die Patenterteilung: **30.06.2010**
(21) Anmeldenummer: 08020951.3
(22) Anmeldetag: 03.12.2008
(51) Int. Cl.: B65G 47/88

(54) **Anschlagmodul, insbesondere für automatisierte Bearbeitungs- und Fördereinrichtungen**
Stop module, especially for automated processing and transport devices
Module de butée, notamment pour des dispositifs de traitement et de transport automatisés

(30) Priorität: 21.12.2007 DE 102007062075
(43) Veröffentlichungstag der Anmeldung: 24.06.2009
(73) Patentinhaber: Robert Bosch GmbH, 70469 Stuttgart (DE)
(72) Erfinder: Ludwig, Peter, 72072 Tübingen (DE); Lindemann, Uwe, 71088 Holzgerlingen (DE)
(74) Vertreter: Maiß, Harald

(56) Entgegenhaltungen:
- DE-U1- 20 207 436
- JP-A- 4 000 032

## Beschreibung

Die Erfindung betrifft ein Anschlagmodul, insbesondere für automatisierte Bearbeitungs- und Fördereinrichtungen, wobei an einem Grundkörper ein Anschlagelement für sich in einer Bewegungsrichtung in einer Bewegungsebene bewegende Gegenstände angeordnet ist, gemäß der im Oberbegriff des Patentanspruches 1 näher definierten Art.

Bei automatisierten Bearbeitungs- und Fördereinrichtungen, welche zum Transport von Gegenständen, insbesondere von Werkstücken oder auf Werkstückträgern befindlichen Werkstücken, ausgebildet sind, kann es aus verschiedenen Gründen nötig sein, den Transport der einzelnen Gegenstände, insbesondere zur Durchführung von Bearbeitungen an den Werkstücken während der Stillstandsphase, aber auch zum Abheben der Werkstücke bzw. Werkstückträger, anzuhalten. Zu diesem Zweck können an automatisierten Transporteinrichtungen Anschlagmodule mit einem Anschlagelement angeordnet werden, wobei das Anschlagelement zwischen einer ersten ausgefahrenen Position, in welcher das Anschlagelement in die Bewegungsbahn der auf der Transporteinrichtung transportierten Gegenstände eingreift, und einer zweiten abgesenkten Position, in welcher das Anschlagelement einen Transport von auf der Transporteinrichtung transportierten Gegenständen freigibt, bewegt werden kann.

Beispielsweise aus der EP 1 777 177 A1 ist ein Anschlagmodul mit einem an einem Grundkörper angeordneten Anschlagglied für sich in einer aktuellen Bewegungsrichtung bewegende Gegenstände bekannt. Hierbei ist das Anschlagglied mittels eines elektrischen Stellglieds per Abwärtshub aus dieser Bewegungsebene heraus und per Aufwärtshub in diese zurückbewegbar. Weiterhin ist eine mit dem Anschlagglied verbundene Dämpfungseinrichtung vorgesehen, um das Anschlagglied von einer ersten Anschlagstellung bis zu einer zweiten Endanschlagstellung gedämpft zu bewegen. Zudem ist das Anschlagmodul mit Rückstellmitteln zur Rückstellung des Anschlagglieds von der zweiten Endanschlagstellung in die erste Anschlagstellung ausgebildet. Hierbei wird vorgeschlagen, dass die Dämpfungseinrichtung wenigstens einen in wenigstens einem Dämpfungszylinder bewegbaren, mit dem Anschlagglied gekoppelten Dämpfungskolben und eine die Kolbenbewegung dämpfende, einen Strömungswiderstand für bei der Kolbenbewegung ausströmendes Druckmedium bildende Drosseleinrichtung aufweist, wobei der Dämpfungszylinder in der Auslösestellung über wenigstens eine Druckleitung mit der Druckkammer verbunden ist.

Nachteilhafterweise ist hierbei der konstruktive Aufwand zur Dämpfung einer durch einen auf das Anschlagglied auftreffenden Gegenstand verursachten Bewegung des Anschlagglieds zwischen der ersten Anschlagstellung und der zweiten Endanschlagstellung groß, so dass eine Fertigung eines derartigen Anschlagmoduls mit relativ hohen Kosten verbunden ist.

Aus der JP 4-000 032 A ist ein gattungsgemäßer Anschlagmodul bekannt. Gemäß der Fig. 7 der JP 4-000 032 A ist das Anschlagmodul zum Einsatz in einer automatisierten Fördereinrichtung geeignet. Das Anschlagelement umfasst einen Grundkörper mit einem Anschlagelement R, das zwischen einer ersten und einer zweiten Endposition bewegt werden kann. In der ersten Endposition ragt das Anschlagelement in die Förderebene der Gegenstände, die auf der Fördereinrichtung gefördert werden. In der zweiten Endposition gibt das Anschlagelement die Bewegung der Gegenstände frei. Weiter ist eine Dämpfungsvorrichtung in Form eines Rotationsdämpfers vorgesehen, mit der die Bewegung des Anschlagselements gedämpft werden kann, wenn es sich von einer ersten Anschlagstellung in eine zweite Endanschlagstellung bewegt, wobei die beiden Anschlagstellungen in Bewegungsrichtung der Gegenstände zueinander versetzt sind.

Es ist Aufgabe der vorliegenden Erfindung, ein Anschlagmodul, insbesondere für automatisierte Bearbeitungs- und Fördereinrichtungen, zu schaffen, bei dem eine Bewegung eines Anschlagelements von einer ersten Endstellung in eine zweite Endstellung auf konstruktiv einfache und effektive Weise gedämpft werden kann.

Diese Aufgabe wird gelöst mit einem Anschlagmodul, insbesondere für automatisierte Bearbeitungs- und Fördereinrichtungen, nach den Merkmalen des Patentanspruches 1.

Weitere Merkmale der Erfindung ergeben sich aus den abhängigen Ansprüchen.

Der mit der Kniehebeleinrichtung zusammenwirkende elektrische Drehantrieb kann vorteilhafterweise klein dimensioniert und somit entsprechend kostengünstig ausgebildet sein. Weiterhin ist es mit einer Kniehebeleinrichtung bei entsprechend ausgebildetem Anschlagelement möglich, das Anschlagelement bei sich mit dem Anschlagelement in Anlage befindlichem Gegenstand mit keiner oder nur einer geringen Gegenkraft in seiner ersten Endposition zu halten.

In einer vorteilhaften Ausbildung eines erfindungsgemäßen Anschlagmoduls ist es vorgesehen, dass der elektrische Drehantrieb über eine Pleueleinrichtung mit der Kniehebeleinrichtung zusammenwirkt. Mittels der Pleueleinrichtung kann auf einfache Weise eine von dem elektrischen Drehantrieb ausgehende rotatorische Bewegung in eine auf die Kniehebeleinrichtung wirkende translatorische Bewegung umgewandelt werden.

In einer einfachen Ausgestaltung der Kniehebeleinrichtung ist das erste Hebelelement der Kniehebeleinrichtung in einem ersten Endbereich über einen zweiten Gelenkpunkt drehbar an dem Grundkörper angeordnet und wirkt in einem zweiten Endbereich über den ersten Gelenkpunkt drehbar mit einem ersten Endbereich des zweiten Hebelelement zusammen, wobei ein zweiter Endbereich des zweiten Hebelelements über einen dritten Gelenkpunkt mit einem dritten Hebelelement zusammenwirkt, welches über einen vierten Gelenkpunkt an dem Grundkörper drehbar festgelegt ist.

Wenn das dritte Hebelelement als Anschlagelement ausgebildet ist, kann das Anschlagelement über die Kniehebeleinrichtung in einer insbesondere rotatorischen Bewegung auf sehr einfache Weise zwischen seiner ersten Endposition und seiner zweiten Endposition bewegt werden, wobei in einer entsprechenden Anordnung des Anschlagelements an der Kniehebeleinrichtung eine von einem in Anlage an dem Anschlagelement befindlichem Gegenstand auf das Anschlagelement wirkende Kraft zur Ausführung der Rotationsbewegung des Anschlagelements verwendet werden kann. Zur Umsetzung der von dem elektrischen Drehantrieb, welcher insbesondere als Schrittmotor ausgebildet ist, auf die Kniehebeleinrichtung wirkenden, wenigstens annähernd in Vertikalrichtung verlaufenden Bewegung kann es in einer einfachen Ausbildung eines erfindungsgemäßen Anschlagmoduls vorgesehen sein, dass die Pleueleinrichtung an ihrem der Kniehebeleinrichtung abgewandten Ende mit einem von dem elektrischen Drehantrieb antreibbaren Nabenelement zusammenwirkt, wobei ein insbesondere runder Endbereich der Pleueleinrichtung derart exzentrisch zu einer Antriebswelle des elektrischen Drehantriebs angeordnet ist, dass eine Drehung des Nabenelements in einer wenigstens teilweise vertikalen Bewegung der Pleueleinrichtung resultiert, mittels welcher das Anschlagelement über die Kniehebeleinrichtung zwischen dessen erster Endposition und dessen zweite Endposition bewegbar ist.

Wenn das erste Hebelelement und das zweite Hebelelement der Kniehebeleinrichtung bei sich in der ersten Position befindlichem Anschlagelement wenigstens annähernd parallel zueinander angeordnet sind, können eventuell in Bewegungsrichtung der Gegenstände auf das Anschlagelement wirkende Kräfte von der Kniehebeleinrichtung aufgefangen werden, da eine in diesem Fall wenigstens annähernd in Richtung der Hebelelemente wirkende Kraft keine oder nur eine geringe Kraft senkrecht, also auf die Pleueleinrichtung wirkend, zu den Hebelelementen verursacht.

Ein besonders einfach ausgebildetes Anschlagelement weist einen sich in Bewegungsrichtung der Gegenstände erstreckenden Körper auf, welcher in einem dem dritten Hebelelement zugewandten ersten Endbereich eine wenigstens annähernd in Bewegungsrichtung der Gegenstände verlaufende Ausnehmung aufweist über welche das Anschlagelement mit dem dritten Hebelelement zusammenwirkt.

Die Rückstelleinrichtung kann dabei eine als Druckfeder ausgebildete Federeinrichtung oder eine als Zugfeder ausgebildete Federeinrichtung, insbesondere eine Konstantkraftfeder, aufweisen, welche an dem Drehhebel angeordnet ist, welcher wiederum mit dem zweiten Endbereich des Anschlagelements zusammenwirkt.

Weitere Vorteile und vorteilhafte Ausgestaltungen des Gegenstandes nach der Erfindung ergeben sich aus den Patentansprüchen und den anhand der Zeichnung prinzipiell beschriebenen Ausführungsbeispielen.

Es zeigen:
Figur 1 eine dreidimensionale Ansicht eines Anschlagmoduls mit einem in einer oberen ersten Position dargestellten Anschlagelement;
Figur 2 eine Explosionsdarstellung des Anschlagmoduls der Figur 1;
Figur 3 eine Mittelschnittdarstellung durch das Anschlagmodul der Figur 1;
Figur 4 eine Schnittdarstellung durch das Anschlagmodul entlang der Achse A-A in Figur 2;
Figur 5 eine weitere Schnittdarstellung durch das Anschlagmodul entlang der Achse B-B in Figur 2;
Figur 6 eine Explosionszeichnung eines alternativ zu dem in den Figuren 1 bis 5 ausgebildeten Anschlagmoduls; und
Figur 7 eine Schnittdarstellung durch das Anschlagmodul der Figur 6, wobei der Schnitt durch das Anschlagmodul analog zu der in der Figur 3 dargestellten Achse B-B verläuft.

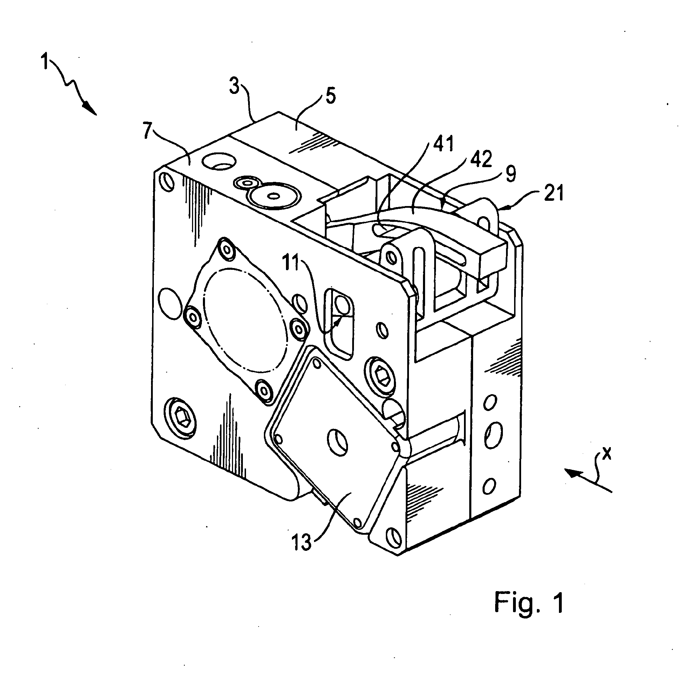

Die Figuren 1 bis 5 zeigen ein erstes Ausführungsbeispiel eines Anschlagmoduls 1, welches insbesondere in automatisierten Bearbeitungs- und Fördereinrichtungen eingesetzt wird, um sich in einer Bewegungsrichtung X in einer Bewegungsebene bewegende Gegenstände, beispielsweise Werkstücke, Werkstückträger oder dergleichen, zu vereinzeln. Nach einer Vereinzelung der Gegenstände können diese individuell behandelt, beispielsweise bearbeitet, umgeleitet usw. werden.

Das Anschlagmodul 1 ist mit einem Grundkörper 3 ausgebildet, welcher sich vorliegend aus zwei Grundkörperelementen 5 und 7 zusammensetzt. Das Anschlagmodul 1 weist weiterhin ein Anschlagelement 9 auf, welches zum Abstoppen bzw. Vereinzeln von in der Bewegungsrichtung X bewegten Gegenständen vorgesehen ist, wobei das Anschlagelement 9 mittels einer Kniehebeleinrichtung 11 von einer in der Figur 1 dargestellten, in die Bewegungsebene der Gegenstände ragenden ersten Endposition in eine eine Bewegung der Gegenstände entlang der Bewegungsrichtung X freigebende untere zweite Endposition und umgekehrt bewegbar ist. Zum Antrieb der Kniehebeleinrichtung ist eine als elektrischer Drehantrieb 13 ausgebildete Antriebseinrichtung vorgesehen.

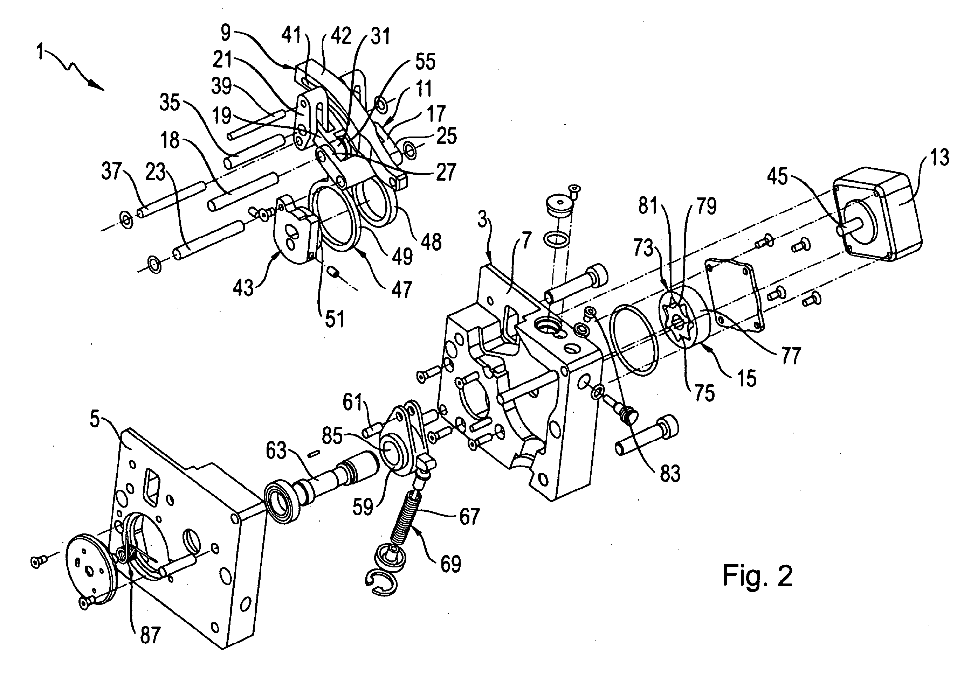

Die einzelnen Elemente des Anschlagmoduls 1 und deren räumliche Anordnung zueinander ist in der in der Figur 2 dargestellten Explosionsdarstellung ersichtlich.

Das Anschlagmodul 1 weist neben einem Mechanismus zur Bewegung des Anschlagelements 9 in die Bewegungsebene und aus der Bewegungsebene der Gegenstände auch eine Dämpfungseinrichtung 15 zur Dämpfung einer in Anlage mit dem Anschlagelement 9 kommenden Gegenstands auf.

Im Folgenden wird zunächst näher auf den Mechanismus zur Bewegung des Anschlagelements 9 in die Bewegungsebene und aus der Bewegungsebene der Gegenstände eingegangen.

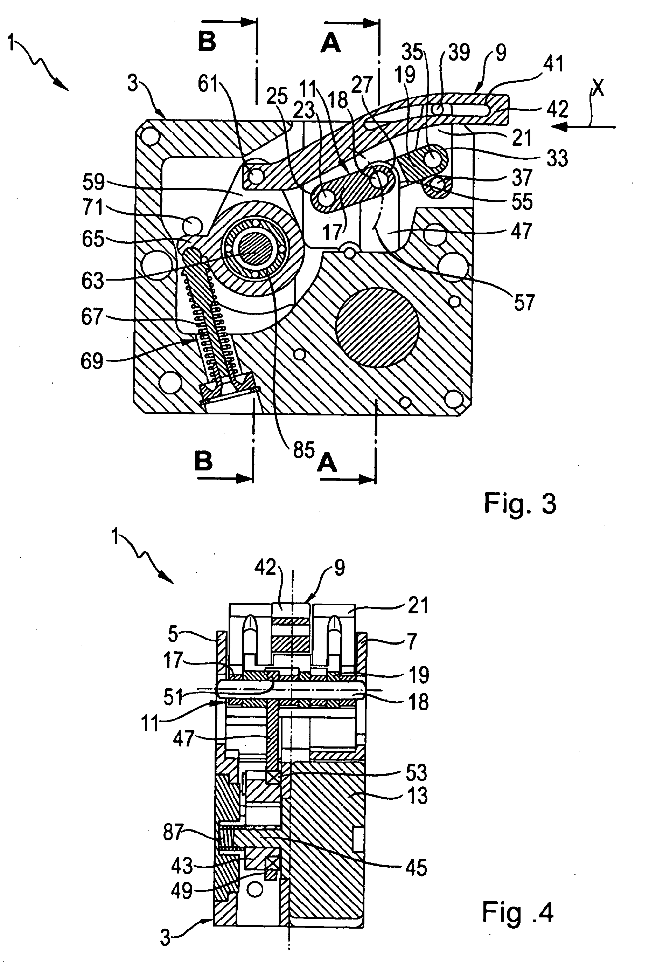

In Figur 3 ist ein Schnitt durch eine Mittelachse des Anschlagmoduls 1 dargestellt. Hierbei ist die Kniehebeleinrichtung 11 ersichtlich, welche mit einem ersten Hebelelement 17 und einem über einen ersten Gelenkpunkt 18 mit dem ersten Hebelelement 17 verbundenen zweiten Hebelelement 19 ausgebildet ist, wobei das zweite Hebelelement 19 der Kniehebeleinrichtung 11 mit einem weiteren dritten Hebelelement 21 zusammenwirkt, welches wiederum mit dem Anschlagelement 9 des Anschlagmoduls 1 zusammenwirkt.

Ein erster Endbereich 25 des ersten Hebelelements 17 der Kniehebeleinrichtung 11 ist dabei über ein einen zweiten Gelenkpunkt 23 bildendes erstes Stiftelement drehbar in dem Grundkörper 3 des Anschlagmoduls 1 angeordnet. Ein dem ersten Endbereich 25 des ersten Hebelelements 17 gegenüberliegender zweiter Endbereich 27 des ersten Hebelelements 17 ist mittels eines den ersten Gelenkpunkt 18 bildenden zweiten Stiftelements gelenkig mit einem ersten Endbereich 31 des zweiten Hebelelements 19 verbunden. Ein dem ersten Endbereich 31 des zweiten Hebelelements 19 gegenüberliegender zweiter Endbereich 33 des zweiten Hebelelements 19 ist wiederum über einen einen dritten Gelenkpunkt 35 bildendes drittes Stiftelement drehbar an dem dritten Hebelelement 21 angeordnet.

Das dritte Hebelelement 21 ist mittels eines einen vierten Gelenkpunkt 27 bildenden vierten Stiftelements 37 an dem Grundkörper 3 des Anschlagmoduls 1 angeordnet. Das dritte Hebelelement 21 ist weiterhin über ein fünftes Stiftelement 39 in einer Ausnehmung 41 des Anschlagelements 9 geführt, wobei das Anschlagelement 9 mit einem sich im Wesentlichen in Bewegungsrichtung der Gegenstände erstreckenden Körper 42 ausgebildet ist, in welchem die sich ebenfalls wenigstens annähernd in Bewegungsrichtung der Gegenstände verlaufende Ausnehmung 41 angeordnet ist, so dass das Anschlagelement 9 bei unbewegtem dritten Hebelelement 21 in Bewegungsrichtung X der Gegenstände gegenüber dem dritten Hebelelement 21 bewegbar ist.

Der dritte Gelenkpunkt 35 ist an dem dritten Hebelelement 21 zwischen dem vierten Gelenkpunkt 37 und dem fünften Stiftelement 39 angeordnet. Das erste Hebelelement 17 und das zweite Hebelelement 19 der Kniehebeleinrichtung 11 sind bei in die Bewegungsebene der Gegenstände ragendem Anschlagelement 9 wenigstens annähernd parallel zueinander angeordnet, d. h. der erste Gelenkpunkt 18, der zweite Gelenkpunkt 23 und der dritte Gelenkpunkt 35 liegen wenigstens annähernd auf einer Achse.

Der elektrische Drehantrieb 13 ist wenigstens annähernd unterhalb des ersten Gelenkpunkts 18 angeordnet, wobei der elektrische Drehantrieb 13 mittels eines beispielsweise in der Figur 4 ersichtlichen, auf einer Antriebsachse 45 des elektrischen Drehantriebs 13 angeordneten Nabenelements 43 und einer exzentrisch zu dem Nabenelement 43 auf der Antriebsachse 45 des elektrischen Drehantriebs 13 angeordneten Pleueleinrichtung 47 mit dem ersten Gelenkpunkt 18 zusammenwirkt.

Die Pleueleinrichtung 47 ist dabei mit einem runden Endbereich 49 ausgebildet, welcher ein auf dem Nabenelement 43 angeordnetes Kugellager 48 umfasst, so dass die Pleueleinrichtung 47 über ein zwischen der Pleueleinrichtung 47 und dem Nabenelement 43 angeordneten O-Ring 53 drehbar mit dem Nabenelement 43 verbunden ist.

Eine Drehung der Antriebsachse 45 des elektrischen Drehantriebs 13 resultiert in einer Drehung des Nabenelements 43, welches durch die exzentrische Anordnung zur Pleueleinrichtung 47 in einer Drehbewegung des runden Endbereichs 49 der Pleueleinrichtung 47 um die Antriebsachse 45 resultiert.

Da die Pleueleinrichtung 47 an ihrem oberen Endbereich 55 über den ersten Gelenkpunkt 18 mit dem ersten Hebelelement 17 der Kniehebeleinrichtung 11 verbunden ist, wird die Pleueleinrichtung 47 an ihrem oberen Ende durch eine Drehung der Antriebsachse 45 des elektrischen Drehantriebs 13 auf einer um den zweiten Gelenkpunkt 23 verlaufenden Kreisbahn 57 aus dem in der Figur 3 gezeigten Zustand nach unten bewegt.

Eine derartige Bewegung des ersten Hebelelements 17 nach unten dreht über den ersten Gelenkpunkt 18 das zweite Hebelelement 19 der Kniehebeleinrichtung 11, wodurch wiederum der dritte Gelenkpunkt 35 wenigstens annähernd in Richtung des zweiten Gelenkpunkts 23 bewegt wird. Hierdurch wird das dritte Hebelelement 21 um den vierten Gelenkpunkt 37 gedreht, so dass auf das Anschlagelement 9 eine wenigsten teilweise nach unten gerichtete Kraft wirkt und das Anschlagelement 9 aus der Bewegungsebene der Gegenstände zur Freigabe deren Bewegung in Bewegungsrichtung X bewegt wird.

Durch eine Umkehr der Drehrichtung der Antriebsachse 45 durch den elektrischen Drehantrieb 13 können die oben beschriebenen Vorgänge in umgekehrter Bewegungsrichtung ausgeführt werden, so dass das Anschlagelement 9 aus der unteren zweiten Endposition zurück in seine obere erste Endposition bewegt werden kann.

Hierbei ist es auch denkbar, dass das Zusammenspiel des elektrischen Drehantriebs mit dem Nabenelement, der Pleueleinrichtung und der Kniehebeleinrichtung derart ausgebildet ist, dass der elektrische Drehantrieb ausschließlich durch eine Drehung der Antriebsachse in einer Richtung sowohl eine Bewegung des Anschlagelements aus der Bewegungsebene der Gegenstände als auch eine Bewegung des Anschlagelements in die Bewegungsebene der Gegenstände ausführen kann.

Wie bereits weiter oben erwähnt, weist das Anschlagmodul 1 eine Dämpfungseinrichtung 15 auf. Die Dämpfungseinrichtung 15 ist dazu vorgesehen, eine Bewegung des Anschlagelements 9 aus einer beispielsweise in der Fig. 3 ersichtlichen ersten Anschlagstellung in eine gegenüber der ersten Anschlagstellung in Bewegungsrichtung X der Gegenstände versetzte zweite Endanschlagstellung bei einem an dem Anschlagelement 9 anliegenden Gegenstand abzudämpfen.

Hierzu ist das Anschlagelement 9 wie bereits oben beschrieben bei feststehendem dritten Hebelelement 21 gegenüber dem dritten Hebelelement 21 durch das in der Ausnehmung 41 des Körpers 42 des Anschlagelements 9 geführte fünfte Stiftelement 39 in Bewegungsrichtung X der Gegenstände verschiebbar.

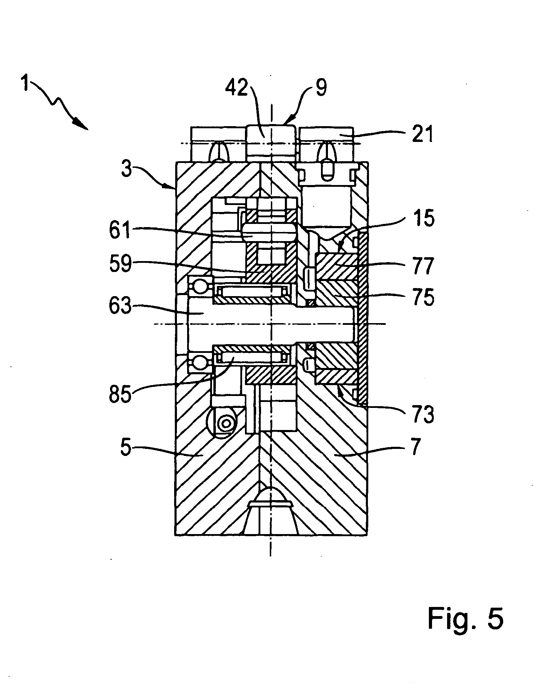

Kommt ein in Bewegungsrichtung X in der Bewegungsebene bewegter Gegenstand mit dem sich in der ersten Endstellung befindlichen Anschlagelement 9 in Kontakt, so bewegt der Gegenstand durch seine auf das Anschlagelement 9 wirkende Kraft das Anschlagelement 9 in seiner Bewegungsrichtung. Hierdurch wird ein insbesondere in den Figuren 4 und 5 ersichtlicher Drehhebel 59, welcher an einem dem fünften Stiftelement 39 des Anschlagelements 9 abgewandten Ende des Anschlagelements 9 über einen fünften Gelenkpunkt 61 drehbar mit dem Anschlagelement 9 verbunden ist, um eine in dem Grundkörper 3 gelagerte Welle 63 gedreht. Der Drehhebel 59 ist dabei auf der Welle 63 angeordnet, so dass sich die Welle 63 bei einer derartigen Drehrichtung des Drehhebels 59 entsprechend mitdreht.

Der Drehhebel 59 weist einen Vorsprung 65 auf, welcher bei in seiner ersten Endstellung befindlichem Anschlagelement 9 mit einer in diesem Zustand im Wesentlichen unvorgespannten Rückstelleinrichtung zusammenwirkt, welche vorliegend als mit einer Druckfeder 67 ausgebildete Federeinrichtung 69 ausgebildet ist.

Bei einer Überführung des Anschlagelements 9 von seiner ersten Anschlagstellung in seine zweite Endanschlagstellung wird die Druckfeder 67 der Federeinrichtung 69 durch eine daraus resultierende Drehung des Drehhebels 59 vorgespannt und wirkt der von dem an dem Anschlagelement 9 anliegenden Gegenstand auf das Anschlagelement 9 ausgeübten Kraft entgegen.

Wird nun das Anschlagelement 9 über die Kniehebeleinrichtung 11 von dem elektrischen Drehantrieb 13 in seine untere zweite Position überführt, so gerät der an dem Anschlagelement 9 angeordnete Gegenstand außer Eingriff mit dem Anschlagelement 9, wodurch an dem Anschlagelement 9 keine Gegenkraft zur der von der vorgespannten Druckfeder 67 der Federeinrichtung 69 mittels des Drehhebels 59 auf das Anschlagelement 9 wirkenden Kraft mehr vorliegt. Die Druckfeder 67 der Federeinrichtung 69 dreht somit den Drehhebel 59 zurück in die beispielsweise in der Figur 3 dargestellte Position.

Begrenzt wird diese Bewegung des Drehhebels 59 von einem in dem Grundkörper 3 angeordneten sechsten Stiftelement 71, welches an einer oberen Seite des Vorsprungs 65 des Drehhebels 59 angeordnet ist.

Auf der Welle 63 ist neben dem Drehhebel 59 in einem hierzu seitlich versetzten Bereich ein Rotationsdämpfer 73 angeordnet. Der Rotationsdämpfer, welcher in der Figur 1 und 5 ersichtlich ist, ist dabei insbesondere als Gerotor 73 ausgebildet und weist einen drehfest auf der Welle 63 angeordneten inneren Rotor 75 und einen in dem Grundkörper 3 gelagerten äußeren Rotor 77 auf, wobei der äußere Rotor 77 exzentrisch zu dem inneren Rotor 75 angeordnet ist. Eine Anzahl von Zähnen 79 des inneren Rotors 75 - vorliegend sechs - ist dabei um eins kleiner als eine Anzahl von mit den Zähnen 79 des inneren Rotors 75 zusammenwirkenden Ausnehmungen 81 des äußeren Rotors 77 - vorliegend sieben.

Der innere Rotor 75 des Rotationsdämpfers 73, welcher über eine formschlüssige Verbindung mit der Welle 63 verbunden ist, wird bei einer Drehung des Drehhebels 59 über die Welle 63 in Drehung versetzt.

Bei einer Drehung des Rotationsdämpfers 73 entstehen zwischen den Berührungspunkten von innerem Rotor 75 und äußerem Rotor 77 Verdrängungskammern, deren Volumen sich bei der Drehung ändert. Diese Veränderung erfolgt sinusförmig, wodurch ein sehr gleichmäßiger Pumpvorgang erzeugt wird. Infolge der zwangsläufigen Verdrängung verhält sich ein von dem Rotationsdämpfer 73 erzeugter und von einem nicht kompressiblen Fluid, wie beispielsweise einem Öl, übertragener Fluid-Förderstrom proportional zur Drehzahl. Dieser Fluid-Förderstrom kann von einer insbesondere verstellbar ausgebildeten Drosseleinrichtung 83 derart beeinflusst werden, dass ein auf die Welle 63 wirkendes und über den Drehhebel 59 einer Bewegung des Anschlagelements 9 von seiner ersten Anschlagstellung in seine zweite Endanschlagstellung entgegenwirkendes Bremsmoment erzeugt wird.

Mittels dieses Bremsmoments kann eine Bewegung des von seiner ersten Anschlagstellung durch einen Gegenstand in seine zweite Endanschlagstellung bewegten Anschlagelements 9 gedämpft werden und somit die auf den Gegenstand wirkenden Kräfte vorteilhafterweise reduziert werden.

Auf der Welle 63 ist weiterhin eine Freilaufeinrichtung 85 angeordnet, mittels welcher eine Bewegung des Drehhebels 59 zur Bewegung des Anschlagelements 9 von seiner zweiten Endanschlagstellung in seine erste Anschlagstellung von dem Rotationsdämpfer 73 entkoppelt ist, so dass eine derartige Bewegung des Anschlagelements 9 mit sehr geringem Kraftaufwand durchführbar ist und die Druckfeder 67 der Federeinrichtung 69 entsprechend gering dimensioniert ausgebildet werden kann.

Der Bewegungsablauf des Anschlagmoduls 1 bei einem mit dem Anschlagelement 9 in Anlage kommenden Gegenstandes verläuft somit wie folgt:
Der an das Anschlagelement 9 auflaufende Gegenstand verschiebt das Anschlagelement 9 von seiner ersten Endstellung in seine zweite Anschlagstellung, wodurch der Drehhebel 59 die ebenfalls mit dem Drehhebel 59 zusammenwirkende Druckfeder 67 der Federeinrichtung 69 spannt. Der Gegenstand wird dabei auf der Fördereinrichtung fixiert.

Um den Gegenstand wieder freizugeben, dreht der elektrische Drehantrieb 13, welcher vorliegend als Schrittmotor ausgebildet ist, das Nabenelement 43, welches exzentrisch zu der Pleueleinrichtung 47 angeordnet ist. Durch diese Drehbewegung vollzieht die Pleueleinrichtung 47 eine Vertikalbewegung nach unten, wodurch das Anschlagelement 9 über die Kniehebeleinrichtung 11 von seiner in die Bewegungsebene der Gegenstände ragenden ersten Position in seine die Bewegung von Gegenständen in der Bewegungsrichtung X freigebende zweite Position abgesenkt werden kann. Während dieser Abwärtsbewegung des Anschlagelements 9 entspannt sich die Druckfeder 67 der Federeinrichtung 69 und bewegt den Drehhebel 59 zurück in seine Ausgangsstellung.

Durch eine entgegengesetzte Drehbewegung des elektrischen Drehantriebs 13 kann das Anschlagelement 9 nun zurück in seine erste Position bewegt werden.

In der Figur 4 ist eine Schenkelfeder 87 dargestellt, welche in einem stromlosen Zustand dafür vorgesehen ist, das Anschlagelement 9 zurück in seine erste Position zu bewegen.

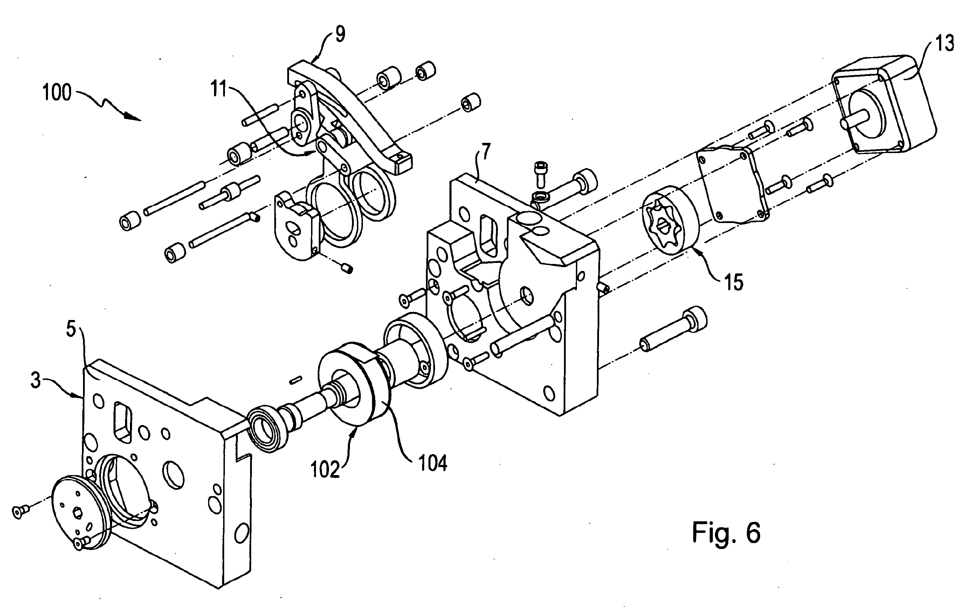

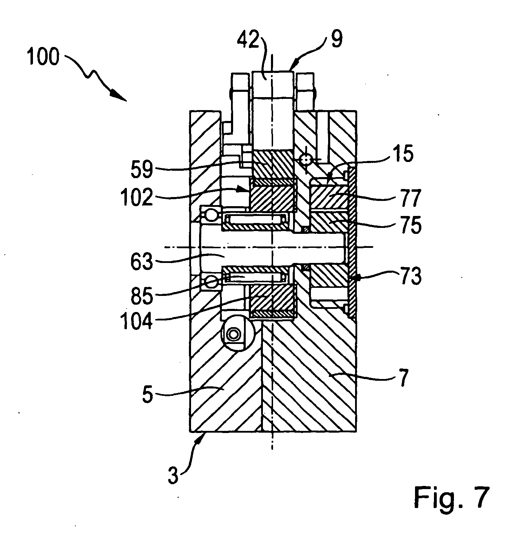

In den Figuren 6 und 7 ist ein weiteres Anschlagmodul 100 gezeigt, welches gegenüber dem in den Figuren 1 bis 5 gezeigten Anschlagmodul 1 im Wesentlichen hinsichtlich seiner Rückstelleinrichtung 102 verändert ausgebildet ist. Aus Gründen der

Übersichtlichkeit sind funktionsgleiche Bauelemente mit den gleichen Bezugszeichen wie bei der Ausführung gemäß den Figuren 1 bis 5 bezeichnet.

Die Rückstelleinrichtung weist hierbei eine als Zugfeder 104 ausgebildete Federeinrichtung 102 auf, welche insbesondere in Form einer Konstantkraftfeder ausgebildet ist. Die Zugfeder 104 ist dabei auf der Welle 63 derart angeordnet, dass die Federeinrichtung 102 bei einem sich in seiner zweiten Endanschlagstellung befindlichem Anschlagelement 9 eine Kraft ausübt, welche das Anschlagelement 9 in Richtung seiner ersten Anschlagstellung 9 drückt.

Es versteht sich, dass die beschriebenen Ausführungsvarianten nur exemplarisch sind, so dass auch Kombinationen der beschriebenen Ausrührungen und Abweichungen hiervon von der Erfindung umfasst sind.

## Patentansprüche

1. Anschlagmodul, insbesondere für automatisierte Bearbeitungs- und Fördereinrichtungen, wobei an einem Grundkörper (3) ein Anschlagelement (9) für sich in einer Bewegungsrichtung (X) in einer Bewegungsebene bewegende Gegenstände angeordnet ist, und wobei das **Anschlagelement (9) zwischen** einer ersten Endposition, in welcher das Anschlagelement (9) in die Bewegungsebene der Gegenstände ragt, und einer zweiten Endposition, in welcher das Anschlagelement (9) eine Bewegung von Gegenständen in der Bewegungsebene freigibt, bewegbar ist, und wobei eine mit dem Anschlagelement (9) zusammenwirkende Dämpfungseinrichtung (15) vorgesehen ist, um eine Bewegung des Anschlagelements (9) von einer ersten Anschlagstellung in eine gegenüber der ersten Anschlagstellung wenigstens annähernd in Bewegungsrichtung (X) der Gegenstände versetzte zweite Endanschlagstellung bei einem an dem Anschlagelement (9) anliegenden Gegenstand zu dämpfen, wobei die Dämpfungseinrichtung (15) die Bewegung des Anschlagelements (9) von der ersten Anschlagstellung in die zweite Endanschlagstellung mit einem Rotationsdämpfer (73) dämpft,
**dadurch gekennzeichnet,**
**dass das Anschlagelement (9) mittels einer Antriebseinrichtung (13) bewegbar ist, wobei** der Rotationsdämpfer (73) einen inneren Rotor (75) und einen äußeren Rotor (77) aufweist und insbesondere als Gerotor ausgebildet ist, wobei der äußere Rotor (77) exzentrisch zu dem inneren Rotor (75) angeordnet ist und eine Anzahl von mit Zähnen (79) des inneren Rotors (75) zusammenwirkenden Ausnehmungen (81) des äußeren Rotors (77) um eins größer als die Zahl der Zähne (79) des inneren Rotors (75) ist.

2. Anschlagmodul nach **Anspruch 1,**
**dadurch gekennzeichnet,**
**dass** der Rotationsdämpfer (73) eine insbesondere verstellbar ausgebildete Drosseleinrichtung (83) aufweist.

3. Anschlagmodul nach einem der Ansprüche **1 oder 2,**
**dadurch gekennzeichnet,**
**dass** der innere Rotor (75) des Rotationsdämpfers (73) auf einer Achse (63) mit einem Drehhebel (59) angeordnet ist, welcher die wenigstens annähernd translatorische Bewegung des Anschlagelements (9) zwischen seiner ersten Anschlagstellung und seiner zweiten Anschlagstellung in eine rotatorische Bewegung umwandelt.

4. Anschlagmodul nach Anspruch **3**,
**dadurch gekennzeichnet,**
**dass** der innere Rotor (75) des Rotationsdämpfers (73) über eine Freilaufeinrichtung (85) mit dem Drehhebel (58) zusammenwirkt, wobei die Freilaufeinrichtung (85) den inneren Rotor (75) des Rotationsdämpfers (73) von einer derartigen Drehung des Drehhebels (58) entkoppelt, welche das Anschlagelement (9) von seiner zweiten Endanschlagstellung in seine erste Anschlagstellung bewegt.

5. Anschlagmodul nach einem der Ansprüche **1 bis 4,**
**dadurch gekennzeichnet,**
**dass** eine Rückstelleinrichtung (69) vorgehen ist, mittels welcher das Anschlagelement (9) von seiner zweiten Endanschlagstellung in die erste Anschlagstellung bewegbar ist.

6. Anschlagmodul nach Anspruch **5 soweit dieser auf Anspruch 3 rückbezogen ist,**
**dadurch gekennzeichnet,**
**dass** die Rückstelleinrichtung (69) über den Drehhebel (59) mit dem Anschlagelement (9) zusammenwirkt.

7. Anschlagmodul nach einem der Ansprüche **1 bis 6,**
**dadurch gekennzeichnet,**
**dass** die Antriebseinrichtung (13) als elektrischer Drehantrieb, insbesondere als Stellantrieb, ausgebildet ist.

8. Anschlagmodul nach Anspruch **7**,
**dadurch gekennzeichnet,**
**dass** die Bewegung des Anschlagelements (9) in und aus der Bewegungsebene von Gegenständen durch eine mit dem elektrischen Drehantrieb (13) zusammenwirkende Kniehebeleinrichtung (11) umgesetzt ist, welche wenigstens zwei über einen ersten Gelenkpunkt (18) miteinander verbundene Hebelelemente (17, 19) aufweist, wobei der elektrische Drehantrieb (13) mit dem ersten Gelenkpunkt (18) zusammenwirkt.

9. Anschlagmodul nach Anspruch **8**,
**dadurch gekennzeichnet,**
**dass** der elektrische Drehantrieb (13) über eine Pleueleinrichtung (47) mit der Kniehebeleinrichtung (11) zusammenwirkt.

10. Anschlagmodul nach einem der Ansprüche **8 oder 9,**
**dadurch gekennzeichnet,**
**dass** das erste Hebelelement (17) der Kniehebeleinrichtung (11) in einem ersten Endbereich (25) über einen zweiten Gelenkpunkt (23) drehbar an dem Grundkörper (3) angeordnet ist und in einem zweiten Endbereich (27) über den ersten Gelenkpunkt (18) drehbar mit einem ersten Endbereich (31) des zweiten Hebelelements (19) zusammenwirkt, wobei ein zweiter Endbereich (33) des zweiten Hebelelements (19) über einen dritten Gelenkpunkt (35) mit einem dritten Hebelelement (21) zusammenwirkt, welches über einen vierten Gelenkpunkt (37) an dem Grundkörper (3) drehbar festgelegt ist.

## Claims

1. Stop module, in particular for automated machining and conveying equipment, a basic body (3) having arranged on it a stop element (9) for articles moving in a direction of movement (X) in a movement plane, and the stop element (9) being movable between a first end position, in which the stop element (9) projects into the movement plane of the articles, and a second end position, in which the stop element (9) enables a movement of articles in the movement plane, and a damping device (15) which cooperates with the stop element (9) being provided, in order, when an article bears against the stop element (9), to damp a movement of the stop element (9) from a first stop position into a second end stop position offset with respect to the first stop position at least approximately in the direction of movement (X) of the articles, the damping device (15) damping the movement of the stop element (9) from the first stop position into the second end stop position by means of a rotary damper (73), **characterized in that** the stop element (9) is movable by means of a drive device (13), the rotary damper (73) having an inner rotor (75) and an outer rotor (77) and being designed, in particular, as a gerotor, the outer rotor (77) being arranged eccentrically with respect to the inner rotor (75), and a number of recesses (81) of the outer rotor (77) which cooperate with teeth (79) of the inner rotor (75) being larger by one than the number of teeth (79) of the inner rotor (75).

2. Stop module according to Claim 1, **characterized in that** the rotary damper (73) has a throttle device (83) designed, in particular, to be adjustable.

3. Stop module according to either of Claims 1 and 2, **characterized in that** the inner rotor (75) of the rotary damper (73) is arranged on a shaft (63) having a rotary lever (59) which converts the at least approximately translational movement of the stop element (9) between its first stop position and its second stop position into a rotational movement.

4. Stop module according to Claim 3, **characterized in that** the inner rotor (75) of the rotary damper (73) cooperates via a freewheel device (85) with the rotary lever (58), the freewheel device (85) decoupling the inner rotor (75) of the rotary damper (73) from a rotation of the rotary lever (58) such as to move the stop element (9) from its second end stop position into its first stop position.

5. Stop module according to one of Claims 1 to 4, **characterized in that** a return device (69) is provided, by means of which the stop element (9) is movable from its second end stop position into the first stop position.

6. Stop module according to Claim 5, in so far as it refers back to Claim 3, **characterized in that** the return device (69) cooperates with the stop element (9) via the rotary lever (59).

7. Stop module according to one of Claims 1 to 6, **characterized in that** the drive device (13) is designed as an electric rotary drive, in particular as an actuating drive.

8. Stop module according to Claim 7, **characterized in that** the movement of the stop element (9) into and out of the movement plane of articles is implemented by means of a toggle lever device (11) which cooperates with the electric rotary drive (13) and which has at least two lever elements (17, 19) connected to one another via a first articulation point (18), the electric rotary drive (13) cooperating with the first articulation point (18).

9. Stop module according to Claim 8, **characterized in that** the electric rotary drive (13) cooperates with the toggle lever device (11) via a connecting-rod device (47).

10. Stop module according to either of Claims 8 and 9, **characterized in that** the first lever element (17) of the toggle lever device (11), in a first end region (25), is arranged rotatably on the basic body (3) via a second articulation point (23) and, in a second end region (27), cooperates rotatably via the first articulation point (18) with a first end region (31) of the second lever element (19), a second end region (33) of the second lever element (19) cooperating via a third articulation point (35) with a third lever element (21) which is secured rotatably to the basic body (3) via a fourth articulation point (37).

## Revendications

1. Module de butée, en particulier pour des dispositifs de traitement et de transport automatisés, dans lequel un élément de butée (9) est disposé sur un corps de base (3) pour des objets se déplaçant dans une direction de déplacement (X) dans un plan de déplacement, et dans lequel l'élément de butée (9) peut être déplacé entre une première position d'extrémité dans laquelle l'élément de butée (9) pénètre dans le plan de déplacement des objets, et une deuxième position d'extrémité dans laquelle l'élément de butée (9) libère un déplacement des objets dans le plan de déplacement, et dans lequel un dispositif d'amortissement (15) coopérant avec l'élément de butée (9) est prévu, afin d'amortir un déplacement de l'élément de butée (9) d'une première position de butée dans une deuxième position de butée de fin de course décalée par rapport à la première position de butée au moins approximativement dans la direction du déplacement (X) des objets, dans le cas où un objet s'applique contre l'élément de butée (9), le dispositif d'amortissement (15) amortissant le déplacement de l'élément de butée (9) de la première position de butée dans la deuxième position de butée de fin de course avec un amortisseur de rotation (73),
**caractérisé en ce que**
l'élément de butée (9) peut être déplacé au moyen d'un dispositif d'entraînement (13), l'amortisseur de rotation (73) présentant un rotor interne (75) et un rotor externe (77) et étant réalisé notamment sous forme de gérotor, le rotor externe (77) étant disposé de manière excentrée par rapport au rotor interne (75) et un certain nombre d'évidements (81) du rotor externe (77) coopérant avec des dents (79) du rotor interne (75) étant supérieur d'une unité au nombre des dents (79) du rotor interne (75).

2. Module de butée selon la revendication 1,
**caractérisé en ce que**
l'amortisseur de rotation (73) présente un dispositif d'étranglement (83) notamment réalisé de manière réglable.

3. Module de butée selon l'une quelconque des revendications 1 ou 2,
**caractérisé en ce que**
le rotor interne (75) de l'amortisseur de rotation (73) est disposé sur un axe (63) avec un levier pivotant (59) qui convertit en un mouvement de rotation le mouvement de translation au moins approximatif de l'élément de butée (9) entre sa première position de butée et sa deuxième position de butée.

4. Module de butée selon la revendication 3,
**caractérisé en ce que**
le rotor interne (75) de l'amortisseur de rotation (73) coopère par le biais d'un dispositif de roue libre (85) avec le levier pivotant (58), le dispositif de roue libre (85) désaccouplant le rotor interne (75) de l'amortisseur de rotation (73) d'une telle rotation du levier pivotant (58), qui déplace l'élément de butée (9) de sa deuxième position de butée de fin de course dans sa première position de butée.

5. Module de butée selon l'une quelconque des revendications 1 à 4,
**caractérisé en ce**
**qu'**un dispositif de rappel (69) est prévu, au moyen duquel l'élément de butée (9) peut être déplacé de sa deuxième position de butée de fin de course dans la première position de butée.

6. Module de butée selon la revendication 5, dans la mesure où elle dépend de la revendication 3,
**caractérisé en ce que**
le dispositif de rappel (69) coopère par le biais du levier pivotant (59) avec l'élément de butée (9).

7. Module de butée selon l'une quelconque des revendications 1 à 6,
**caractérisé en ce que**
le dispositif d'entraînement (13) est réalisé sous forme d'entraînement en rotation électrique, notamment sous forme d'entraînement de commande.

8. Module de butée selon la revendication 7,
**caractérisé en ce que**
le déplacement de l'élément de butée (9) dans et hors du plan de déplacement d'objets est converti par un dispositif de genouillère (11) coopérant avec l'entraînement en rotation électrique (13), qui présente au moins deux éléments de levier (17, 19) connectés l'un à l'autre par le biais d'un premier point d'articulation (18), l'entraînement en rotation électrique (13) coopérant avec le premier point d'articulation (18).

9. Module de butée selon la revendication 8,
**caractérisé en ce que**
l'entraînement en rotation électrique (13) coopère par le biais d'un dispositif de bielle (47) avec le dispositif de genouillère (11).

10. Module de butée selon l'une quelconque des revendications 8 ou 9,
**caractérisé en ce que**
le premier élément de levier (17) du dispositif de genouillère (11) est disposé dans une première région d'extrémité (25) de manière à pouvoir tourner sur le corps de base (3) par le biais d'un deuxième point d'articulation (23) et coopère dans une deuxième région d'extrémité (27) par le biais du premier point d'articulation (18) de manière rotative avec une première région d'extrémité (31) du deuxième élément de levier (19), une deuxième région d'extrémité (33) du deuxième élément de levier (19) coopérant par le biais d'un troisième point d'articulation (35) avec un troisième élément de levier (21), qui est fixé de manière rotative par le biais d'un quatrième point d'articulation (37) sur le corps de base (3).
